(19) **Europäisches Patentamt / European Patent Office / Office européen des brevets**

(11) **EP 3 971 840 A1**

(12) **EUROPEAN PATENT APPLICATION**
published in accordance with Art. 153(4) EPC

(43) Date of publication:
**23.03.2022 Bulletin 2022/12**

(21) Application number: **21819707.7**

(22) Date of filing: **23.03.2021**

(51) Int Cl.:
**G06T 17/00** (2006.01)

(86) International application number:
**PCT/CN2021/082485**

(87) International publication number:
**WO 2022/001222 (06.01.2022 Gazette 2022/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2020 CN 202010607430**

(71) Applicant: **Shanghai Sensetime Intelligent Technology Co., Ltd. Shanghai 200233 (CN)**

(72) Inventors:
 • **WANG, Min**
  **Shanghai 200233 (CN)**
 • **QIU, Feng**
  **Shanghai 200233 (CN)**
 • **LIU, Wentao**
  **Shanghai 200233 (CN)**
 • **QIAN, Chen**
  **Shanghai 200233 (CN)**
 • **MA, Lizhuang**
  **Shanghai 200233 (CN)**

(74) Representative: **Lavoix**
  **Bayerstraße 83**
  **80335 München (DE)**

(54) **THREE-DIMENSIONAL MODEL GENERATION METHOD, NEURAL NETWORK GENERATION METHOD, AND DEVICES**

(57) The embodiments of the disclosure provide a three-dimensional model generation method and apparatus, and a neural network generation method and apparatus. The three-dimensional model generation method includes: acquiring first sphere position information of each first sphere of multiple first spheres in a camera coordinate system based on a first image including a first object, where the first spheres are configured to represent different parts of the first object respectively; generating a first rendered image based on the first sphere position information of the first spheres; obtaining gradient information of the first rendered image based on the first rendered image and a semantically segmented image of the first image; and adjusting the first sphere position information of the first spheres based on the gradient information of the first rendered image, and generating a three-dimensional model of the first object by utilizing the adjusted first sphere position information of the first spheres.

```
S101 — First sphere position information of each first sphere of multiple first
       spheres in a camera coordinate system is acquired based on a first image
       including a first object, where the multiple first spheres are configured to
       represent different parts of the first object respectively
          ↓
S102 — A first rendered image is generated based on the first sphere position
       information of the multiple first spheres
          ↓
S103 — Gradient information of the first rendered image based on the first
       rendered image and a semantically segmented image of the first image
          ↓
S104 — The first sphere position information of the multiple first spheres is
       adjusted based on the first rendered image gradient information, and a
       three-dimensional model of the first object is generated by utilizing the
       adjusted first sphere position information of the multiple first spheres
```

**FIG. 1**

EP 3 971 840 A1

**Description**

CROSS-REFERENCE TO RELATED APPLICATION

This application claims priority to Chinese patent application No. 202010607430.5 filed on June 29, 2020, the disclosure of which is hereby incorporated by reference in its entirety.

TECHNICAL FIELD

The disclosure relates to the technical field of image processing, and particularly to a three-dimensional model generation method and apparatus, a neural network generation method and apparatus, an electronic device and a computer-readable storage medium.

BACKGROUND

In the process of reconstructing a three-dimensional model based on a two-dimensional image, the feature of an image needs to be acquired by a deep neural network, and then image feature regression is adopted to get parameters of the three-dimensional model, and the three-dimensional model is reconstructed based on the obtained parameters of the three-dimensional model.

The existing three-dimensional model generation method has the problem of low accuracy.

SUMMARY

Embodiments of the disclosure provide at least a three-dimensional model generation method and apparatus, a neural network generation method and apparatus, an electronic device and a computer-readable storage medium.

In a first aspect, an embodiment of the disclosure provides a three-dimensional model generation method, which includes: acquiring first sphere position information of each first sphere of multiple first spheres in a camera coordinate system based on a first image including a first object, where the multiple first spheres are configured to represent different parts of the first object respectively; generating a first rendered image based on the first sphere position information of the multiple first spheres; obtaining gradient information of the first rendered image based on the first rendered image and a semantically segmented image of the first image; and adjusting the first sphere position information of the multiple first spheres based on the gradient information of the first rendered image, and generating a three-dimensional model of the first object by utilizing the adjusted first sphere position information of the multiple first spheres.

Therefore, image rendering is performed on the first sphere position information of the multiple first spheres representing the three-dimensional model, the gradient information capable of representing the degree of correctness of the first sphere position information of the multiple first spheres is determined based on the result of rendering the first image, and the first sphere position information corresponding to the first spheres is readjusted respectively based on the gradient information, such that the adjusted first sphere position information has higher accuracy, i.e., the three-dimensional model recovered based on the first sphere position information corresponding to the first spheres respectively further has higher accuracy.

In an optional implementation, the operation of generating the first rendered image based on first sphere position information of the multiple first spheres includes: determining first three-dimensional position information of each vertex of multiple patches forming each first sphere in a camera coordinate system respectively based on the first sphere position information; and generating the first rendered image based on the first three-dimensional position information of each vertex of the multiple patches forming each first sphere in the camera coordinate system.

Therefore, a first object is divided into multiple parts represented as different first spheres, the first rendered image is generated based on the first three-dimensional position information of each vertex of the multiple patches forming different spheres in the camera coordinate system, the first rendered image includes three-dimensional relation information of the different parts of the first object, and a three-dimensional model of the first object may be constrained based on the gradient information determined by the first rendered image, such that the three-dimensional model of the first object has higher accuracy.

In an optional implementation, the operation of determining first three-dimensional position information of each vertex of the multiple patches forming each first sphere in a camera coordinate system based on first sphere position information includes: determining the first three-dimensional position information of each vertex of the multiple patches forming each first sphere in the camera coordinate system respectively based on a first positional relation between template vertices of multiple template patches forming a template sphere and a center point of the template sphere, as well as the first sphere position information of each first sphere.

Therefore, multiple first spheres are obtained by deforming multiple template patches, and the surfaces of the spheres are characterized by the patches, such that the complexity in the generation of the first rendered image through rendering is reduced.

In an optional implementation, the first sphere position information of each first sphere includes: second three-dimensional position information of a center point of each first sphere in the camera coordinate system, lengths corresponding to three coordinate axes of each first sphere respectively, and a rotation angle of each first sphere relative to the camera coordinate system.

Therefore, the position and attitude of each first sphere in the camera coordinate system may be clearly represented through the foregoing three parameters.

In an optional implementation, the operation of determining first three-dimensional position information of each vertex of the multiple patches forming each first sphere in a camera coordinate system respectively based on the first positional relation between the template vertices of the multiple template patches forming a template sphere and the center point of the template sphere, as well as the first sphere position information of each first sphere includes: transforming the template sphere in terms of shape and rotation angle based on lengths corresponding to the three coordinate axes of each first sphere respectively and the rotation angle of each first sphere relative to the camera coordinate system; determining a second positional relation between each template vertex and a center point of the transformed template sphere based on the result of transforming the template sphere in terms of shape and rotation angle, as well as the first positional relation; and determining the first three-dimensional position information of each vertex of the multiple patches forming each first sphere in the camera coordinate system respectively based on the second three-dimensional position information of the center point of each first sphere in the camera coordinate system and the second positional relation.

Therefore, the first three-dimensional position information can be quickly acquired.

In an optional implementation, the method further includes: acquiring a camera projection matrix of the first image. The operation of generating the first rendered image based on the first three-dimensional position information of each vertex of the multiple patches forming each first sphere in the camera coordinate system includes: determining a part index and a patch index of each pixel in the first rendered image based on the first three-dimensional position information and the projection matrix; and generating the first rendered image based on the determined part index and patch index of each pixel in the first rendered image. The part index of a pixel is configured to identify a part of the first object corresponding to the pixel; and the patch index of a pixel is configured to identify a patch corresponding to the pixel.

In an optional implementation, the operation of generating the first rendered image based on first three-dimensional position information of each vertex of the multiple patches forming each first sphere in the camera coordinate system includes: for each first sphere, generating the first rendered image corresponding to each first sphere according to the first three-dimensional position information of each vertex of the multiple patches forming each first sphere in the camera coordinate system respectively. The operation of obtaining the gradient information of the first rendered image based on the first rendered image and the semantically segmented image of the first image includes: for each first sphere, obtaining the gradient information of the first rendered image corresponding to each first sphere according to the first rendered image and the semantically segmented image corresponding to each first sphere.

Therefore, it is conducive to simplifying the expression of class values corresponding to different parts and simplifying the computational complexity in gradient calculation.

In an optional implementation, the gradient information of the first rendered image includes: a gradient value of each pixel in the first rendered image. The operation of obtaining the gradient information of the first rendered image based on the first rendered image and the semantically segmented image of the first image includes: traversing each pixel in the first rendered image, and determining the gradient value of each traversed pixel based on a first pixel value of each traversed pixel in the first rendered image and a second pixel value of each traversed pixel in the semantically segmented image.

Therefore, the gradient information of the first rendered image can be obtained based on the first rendered image and the semantically segmented image of the first image.

In an optional implementation, the operation of determining the gradient value of each traversed pixel according to a first pixel value of each traversed pixel in the first rendered image and the second pixel value of each traversed pixel in the semantically segmented image includes: determining a residual error of each traversed pixel according to the first pixel value of each traversed pixel and the second pixel value of each traversed pixel; in the case where the residual error of each traversed pixel is a first value, determining the gradient value of each traversed pixel as the first value; in the case where the residual error of each traversed pixel is not the first value, determining a target first sphere corresponding to each traversed pixel from the multiple first spheres based on the second pixel value of each traversed pixel, and determining a target patch from the multiple patches forming the target first sphere; determining target three-dimensional position information of at least one target vertex of the target patch in the camera coordinate system; wherein in the case where the at least one target vertex is positioned at the position identified by the target three-dimensional position information, the residual error between a new first pixel value obtained by re-rendering each traversed pixel and the second pixel value corresponding to each traversed pixel as the first value; and obtaining the gradient value of each traversed pixel based on first three-dimensional position information and the target three-dimensional position information of the target vertex in the camera coordinate system.

Therefore, the gradient value of each pixel in the first rendered image can be obtained.

In an optional implementation, the operation of acquiring first sphere position information of each of the multiple first spheres in the camera coordinate system based on a first image including the first object includes: performing position information prediction processing on the first image by utilizing a pre-trained position information prediction network to obtain the first sphere position information of each first sphere of the multiple first spheres in the camera coordinate system.

In a second aspect, an embodiment of the disclosure further provides a neural network generation method, which includes: performing three-dimensional position information prediction processing on a second object in a second image by utilizing a to-be-trained neural network to obtain second sphere position information of each second sphere of multiple second spheres representing different parts of the second object in a camera coordinate system; generating a second rendered image based on the second sphere position information corresponding to the multiple second spheres respectively; obtaining gradient information of the second rendered image based on the second rendered image and a semantically annotated image of the second image; and updating the to-be-trained neural network based on the gradient inforamtion of the second rendered image to obtain an updated neural network.

Therefore, after the three-dimensional position information prediction processing is performed on the second object in the second image by utilizing the to-be-optimized neural network to obtain the second sphere position information of the multiple second spheres representing a three-dimensional model of the second object in the second image, image rendering is performed based on the second sphere position information, the gradient information representing the degree of correctness of the second sphere position information of the multiple second spheres is determined based on the result of image rendering, and the to-be-optimized neural network is updated based on the gradient information to obtain the optimized neural network, such that the optimized neural network has higher accuracy in the prediction of the three-dimensional position information.

In a third aspect, an embodiment of the disclosure further provides a three-dimensional model generation apparatus, which includes: a first acquisition part, configured to acquire first sphere position information of each first sphere of multiple first spheres in a camera coordinate system based on a first image including a first object, where the multiple first spheres are configured to represent different parts of the first object respectively; a first generation part, configured to generate a first rendered image based on the first sphere position information of the multiple first spheres; a first gradient determination part, configured to obtain gradient information of the first rendered image based on the first rendered image and a semantically segmented image of the first image; an adjustment part, configured to adjust the first sphere position information of the multiple first spheres based on the gradient information of the first rendered image; and a model generation part, configured to generate a three-dimensional model of the first object by utilizing the adjusted first sphere position information of the multiple first spheres.

In a possible implementation, in the case where a first rendered image is generated based on first sphere position information of the multiple first spheres, the first generation part is configured to: determine first three-dimensional position information of each vertex of multiple patches forming each first sphere in a camera coordinate system respectively based on the first sphere position information; and generate the first rendered image based on the first three-dimensional position information of each vertex of the multiple patches forming each first sphere in the camera coordinate system respectively.

In a possible implementation, in the case where the first three-dimensional position information of each vertex of the multiple patches forming each first sphere in the camera coordinate system respectively is determined based on first sphere position information, the first generation part is configured to: determine the first three-dimensional position information of each vertex of the multiple patches forming each first sphere in the camera coordinate system respectively based on a first positional relation between template vertices of multiple template patches forming a template sphere and a center point of the template sphere, as well the first sphere position information of each first sphere.

In a possible implementation, the first sphere position information of each first sphere includes: second three-dimensional position information of a center point of each first sphere in the camera coordinate system, lengths corresponding to three coordinate axes of each first sphere respectively, and a rotation angle of each first sphere relative to the camera coordinate system.

In a possible implementation, in the case where the first three-dimensional position information of each vertex of the multiple patches forming each first sphere in the camera coordinate system is determined based on the first positional relation between the template vertices of the multiple template patches forming the template sphere and the center point of the template sphere, as well as first sphere position information of each first sphere, the first generation part is configured to: transform the template sphere in terms of shape and rotation angle based on the lengths corresponding to the three coordinate axes of each first sphere respectively and the rotation angle of each first sphere relative to the camera coordinate system; determine a second positional relation between each template vertex and a center point of the transformed template sphere based on the result of transforming the template sphere in terms of shape and rotation angle, as well as the first positional relation; and determine the first three-dimensional position information of each vertex of the multiple patches forming each first sphere in the camera coordinate system based on the second three-dimensional position information of the center point of each first sphere in the camera coordinate system and the second positional relation.

In a possible implementation, the first acquisition part is further configured to: acquire a camera projection matrix of a first image. In the case where the first rendered image is generated based on the first three-dimensional position information of each vertex of the multiple patches forming each first sphere in a camera coordinate system respectively, the first generation part is configured to: determine a part index and a patch index of each pixel in the first rendered image based on the first three-dimensional position information and the projection matrix; and generate the first rendered image based on the determined part index and patch index of each pixel in the first rendered image. The part index of a pixel is configured to identify a part of the first object corresponding to the pixel; and the patch index of a pixel is configured to identify a patch corresponding to the pixel.

In an optional implementation, in the case where the first rendered image is generated based on the first three-dimensional position information of each vertex of the multiple patches forming each first sphere in a camera coordinate system respectively, the first generation part is configured to: for each first sphere, generate the first rendered image corresponding to each first sphere according to the first three-dimensional position information of each vertex of the multiple patches forming each first sphere in the camera coordinate system respectively.

In the case where the gradient information of the first rendered image is obtained based on the first rendered image a semantically segmented image of the first image, the first gradient determination part is configured to: for each first sphere, obtain the gradient information of the first rendered image corresponding to each first sphere according to the first rendered image and the semantically segmented image corresponding to each first sphere.

In a possible implementation, the gradient information of the first rendered image includes: a gradient value of each pixel in a first rendered image. In the case where the gradient information of the first rendered image is obtained based on the first rendered image and the semantically segmented image of a first image, the first gradient determination part is configured to: traverse each pixel in the first rendered image, and determine the gradient value of each traversed pixel based on a first pixel value of each traversed pixel in the first rendered image and a second pixel value of each traversed pixel in the semantically segmented image.

In a possible implementation, in the case where the gradient value of each traversed pixel is determined based on a first pixel value of each traversed pixel in a first rendered image and a second pixel value of each traversed pixel in a semantically segmented image, a first gradient determination part is configured to: determine a residual error of each traversed pixel according to the first pixel value of each traversed pixel and the second pixel value of each traversed pixel; in the case where the residual error of each traversed pixel is a first value, determine the gradient value of each traversed pixel as the first value; in the case where the residual error of each traversed pixel is not the first value determine a target first sphere corresponding to each traversed pixel from the multiple first spheres based on the second pixel value of each traversed pixel, and determine a target patch from the multiple patches forming the target first sphere; determine target three-dimensional position information of at least one target vertex of the target patch in the camera coordinate system, where in the case where the at least one target vertex is positioned at a position identified by the target three-dimensional position information, the residual error between a new first pixel value obtained by re-rendering each traversed pixel and the second pixel value corresponding to each traversed pixel as the first value; and obtain the gradient value of each traversed pixel based on first three-dimensional position information and the target three-dimensional position information of the target vertex in the camera coordinate system.

In a possible implementation, in the case where the first sphere position information of each first sphere of multiple first spheres in the camera coordinate system is acquired based on a first image including a first object, the first acquisition part is configured to: perform position information prediction processing on the first image by utilizing a pretrained position information prediction network to obtain the first sphere position information of each first sphere of the multiple first spheres in the camera coordinate system.

In a fourth aspect, an embodiment of the disclosure further provides a neural network generation apparatus, which includes: a second acquisition part, configured to perform three-dimensional position information prediction processing on a second object in a second image by utilizing a to-be-trained neural network to obtain second sphere position information of each second sphere of multiple second spheres representing different parts of the second object in a camera coordinate system; a second generation part, configured to generate a second rendered image based on the second sphere position information corresponding to the multiple second spheres respectively; a second gradient determination part, configured to obtain gradient information of the second rendered image based on the second rendered image and a semantically annotated image of the second image; and an updating part, configured to update the to-be-trained neural network based on the gradient information of the second rendered image to obtain an updated neural network.

In a fifth aspect, an optional implementation of the disclosure further provides an electronic device, which includes a processor and a memory. The memory is configured to store machine-readable instructions which are executable by the processor, the processor is configured to execute the machine-readable instructions stored in the memory. When the machine-readable instructions are executed by the processor, the steps in the first aspect, or any possible implementation of the first aspect are executed; or the steps in the second aspect, or any possible implementation of the second aspect are executed.

In a sixth aspect, an alternative implementation of the disclosure further provides a computer-readable storage medium. The computer-readable storage medium is configured to store a computer program. When the computer program is run, the steps in the first aspect or any possible implementation of the first aspect are executed; or the steps in the second aspect or any possible implementation of the second aspect are executed.

In a sixth aspect, an alternative implementation of the disclosure further provides a computer program, including computer-readable codes. When the computer-readable codes are run in an electronic device, the steps in the first aspect, or any possible implementation of the first aspect are implemented by a processor of the electronic device; or the steps in the second aspect or any possible implementation of the second aspect are implemented.

In order to make the objectives, features and advantages of the disclosure to be understood clearly and easily, preferred embodiments will be illustrated below in detail with reference to the drawings.

## BRIEF DESCRIPTION OF THE DRAWINGS

In order to illustrate the technical schemes of the embodiments of the disclosure more clearly, the drawings required in the embodiments will be briefly described below, and the drawings herein incorporated in and forming a part of the specification illustrate embodiments consistent with the disclosure and, together with the specification, are used to illustrate the technical schemes of the disclosure. It should be understood that the following drawings merely illustrate certain embodiments of the disclosure and are therefore not intended to limit the scope of the disclosure. It is apparent to those skilled in the art that other related drawings may be derived from the drawings without inventive efforts.

FIG. 1 illustrates a flow diagram of a three-dimensional model generation method according to an embodiment of the disclosure;

FIG. 2 illustrates a schematic diagram of an example of representing a human body through multiple first spheres according to an embodiment of the disclosure;

FIG. 3 illustrates a schematic diagram of an example of a structure of a position information prediction network according to an embodiment of the disclosure;

FIG. 4 illustrates a schematic diagram of an example of transforming a template sphere into a first sphere according to an embodiment of the disclosure;

FIG. 5 illustrates a flow diagram of a method for determining a gradient value of a traversed pixel according to an embodiment of the disclosure;

FIG. 6 illustrates multiple examples of determining target three-dimensional position information when the residual error of a traversed pixel is not a first value according to an embodiment of the disclosure;

FIG. 7 illustrates a flow diagram of a neural network generation method according to an embodiment of the disclosure;

FIG. 8 illustrates a schematic diagram of a three-dimensional model generation apparatus according to an embodiment of the disclosure;

FIG. 9 illustrates a flow diagram of a neural network generation apparatus according to an embodiment of the disclosure; and

FIG. 10 illustrates a schematic diagram of a computer device according to an embodiment of the disclosure.

## DETAILED DESCRIPTION

In order to make the objectives, technical schemes and advantages of the embodiments of the disclosure to be understood clearly, the technical schemes of the embodiments of the disclosure will be illustrated clearly and comprehensively with reference to the drawings. It is apparent that the illustrated embodiments are parts and not all embodiments of the disclosure. Generally, the components of the embodiments of the disclosure, as described and illustrated with reference to the drawings herein, may be arranged and designed in a wide variety of different configurations. Therefore, the following detailed description of the embodiments of the disclosure, presented with reference to the drawings, is not intended to limit the scope of the embodiments of the disclosure as claimed, but is merely representative of selected embodiments of the disclosure. All other embodiments, which may be derived by those skilled in the art from the embodiments of the disclosure without making any inventive efforts, should fall within the scope of the embodiments of the disclosure.

In the process of generating a three-dimensional model based on a two-dimensional image, a neural network is generally adopted to predict parameters of the three-dimensional model of a generated object in the two-dimensional image, and the three-dimensional model is generated based on the parameters of the three-dimensional model. In the process of training the neural network, supervision data of a sample image needs to be utilized to supervise the training process. That is, the parameters of the three-dimensional model of the object in the sample image utilized in the training process are annotated in advance and are utilized for the supervision on the neural network training. Because it is difficult to acquire the supervision data, a simulation system is utilized to acquire the two-dimensional image and the supervision data of the two-dimensional image in many cases. However, there are some differences between a two-dimensional image acquired by the simulation system and a real two-dimensional image, which leads to the problem that the accuracy of the neural network in generating the three-dimensional model based on the real two-dimensional image decreases.

In addition, the existing three-dimensional model generation method cannot deal with the ambiguity problem caused by the fact that some parts of the object of the reconstructed three-dimensional model are blocked, which leads to the incapability of accurately restoring the attitude of the object of the reconstructed three-dimensional model in depth, and then leads to decrease in the accuracy of the generated three-dimensional model.

All of the defects of the foregoing scheme are discovered by the inventor after practice and careful study. Therefore, the process of discovering the foregoing problems and the schemes provided by the disclosure below should be the contributions of the inventor to the embodiments of the disclosure.

Based on the above research, the embodiments of the disclosure provide a three-dimensional model generation method. In the method, image rendering is performed on first sphere position information of multiple first spheres representing the three-dimensional model, gradient information representing degree of correctness of the first sphere position information of the multiple first spheres is determined based on the result of rendering the first image, and the first sphere position information corresponding to the first spheres respectively is readjusted based on the gradient information, such that the adjusted first sphere position information has higher accuracy, i.e., the three-dimensional model recovered based on the first sphere position information corresponding to the first spheres respectively also has higher accuracy.

In addition, according to the three-dimensional model generation method according to the embodiments of the disclosure, since the first sphere position information corresponding to the multiple first spheres is readjusted respectively by utilizing the gradient information representing the degree of correctness of the first sphere position information of the multiple first spheres, the depth information of the first object may be restored more accurately, thereby achieving higher accuracy.

The embodiments of the disclosure further provide a neural network generation method. In the method, three-dimensional position information prediction processing is performed on a second object in a second image by utilizing a to-be-optimized neural network to obtain second sphere position information of multiple second spheres representing a three-dimensional model of the second object in the second image, image rendering is performed based on the second sphere position information, gradient information representing the degree of correctness of the second sphere position information of the multiple second spheres is determined based on the result of image rendering, and the to-be-optimized neural network is updated based on the gradient information to obtain an optimized neural network, such that the optimized neural network has higher accuracy in the prediction of the three-dimensional position information.

It should be noted that same reference numerals and letters designate same items in the following drawings, and therefore, once an item is defined in one drawing, there is no need to further define and explain the item in subsequent drawings.

To enable the readers to better understand the embodiments, firstly, the three-dimensional model generation method according to the embodiment of the disclosure will be illustrated in detail. Generally, an executor of the three-dimensional model generation method according to the embodiment of the disclosure is a computer device with certain computing capacities, including, for example, a terminal device or a server or other processing device, the terminal device may be a UE (User Equipment), a mobile device, a user terminal, a terminal, a cellular telephone, a cordless telephone, a PDA (Personal Digital Assistant), a handheld device, a computing device, a vehicle-mounted device, a wearable device, etc. In some possible implementations, a three-dimensional model generation method may be implemented in a manner that a processor calls computer-readable instructions stored in a memory.

The three-dimensional model generation method according to the embodiments of the disclosure will be firstly described below.

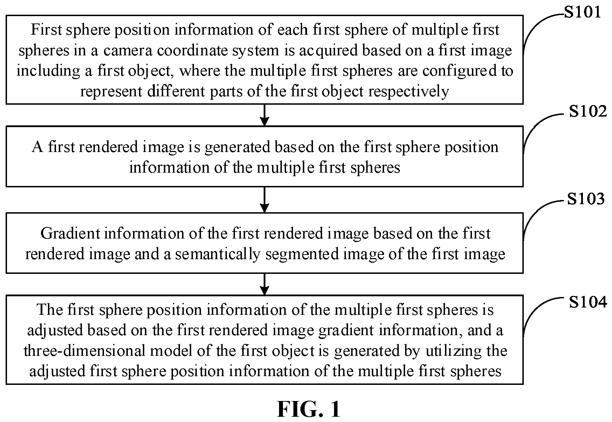

FIG. 1 illustrates a flow diagram of the three-dimensional model generation method according to an embodiment of the disclosure. The method includes steps S101 to S104.

At S101, first sphere position information of each sphere of multiple first spheres in a camera coordinate system is acquired based on a first image including a first object, where the multiple first spheres are configured to represent different parts of the first object respectively.

At S102, a first rendered image is generated based on the first sphere position information of the multiple first spheres.

At S103, gradient information of the first rendered image is obtained based on the first rendered image and a semantically segmented image of the first image.

At S104, the first sphere position information of the multiple first spheres is adjusted based on the gradient information of the first rendered image, and a three-dimensional model of the first object is generated by utilizing the adjusted first sphere position information of the multiple first spheres.

According to the embodiment of the disclosure, on the basis of the acquisition of the first sphere position information of each first sphere of multiple first spheres representing different parts of the first object in the camera coordinate system, the first object is re-rendered according to the first sphere position information to obtain the first rendered image; and the gradient information of the first rendered image is obtained based on the first rendered image and the first semantically segmented image, where the gradient information represents the degree of correctness of the first rendered image obtained by re-rendering the first object based on the first sphere position information, such that in the process of adjusting the first sphere position information of each first sphere based on the gradient information, the parts, which are predicted incorrectly, of the first sphere position information are adjusted, such that the adjusted first sphere position information can more accurately represent the positions of different parts of the first object in the camera coordinate system, and then the three-dimensional model with higher accuracy of the first object is generated based on the adjusted first sphere position information of each first sphere.

In addition, according to the embodiment of the disclosure, the gradient information representing the degree of correctness of the first sphere position information of the multiple first spheres is utilized to readjust the first sphere position information corresponding to the first spheres respectively, such that depth information of the first object may be restored more accurately, and the acquired three-dimensional model has higher accuracy.

The above S101 to S104 will be described respectively in detail below.

According to the above S101, according to the embodiment of the disclosure, when the three-dimensional model of the first object is generated based on the two-dimensional image of the first object, the first object is divided into multiple parts, and three-dimensional position information prediction is performed on the different parts of the first object respectively.

Exemplarily, three-dimensional position information corresponding to the different parts of the first object is represented by the first sphere position information of the first spheres in the camera coordinate system; and the first sphere position information of a first sphere in the camera coordinate system includes three-dimensional position information of a center point of the first sphere in the camera coordinate system (i.e. second three-dimensional position information), lengths corresponding to three coordinate axes of the first sphere, and rotation angle of the each first sphere relative to the camera coordinate system.

Taking a human body being the first object as an example, the human body may be divided into multiple parts according to the limbs and trunk of the human body, and each part is represented by one first sphere; and each first sphere includes three coordinate axes, which respectively represent the bone length and the thicknesses of the corresponding part in different directions.

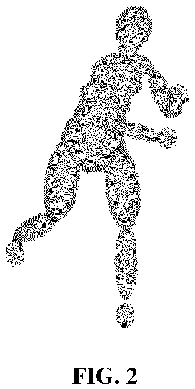

Exemplarily, with reference to FIG. 2, an embodiment of the disclosure provides an example of representing the human body by multiple first spheres, in which the human body is divided into 20 parts, and the 20 parts are represented by 20 first spheres. The human body M is represented as: $M=\{\varepsilon_i | i =1,\cdots,20\}$; where $\varepsilon_i = E(R_i, C_i, X_i)$; and where $\varepsilon_i$ represents the first sphere position information of the i-th first sphere in the camera coordinate system, i.e., position and attitude data of the corresponding part of the first sphere in the camera coordinate system; $X_i$ represents size data of the i-th first sphere, and parameters of which include: bone length $l_i$, and thicknesses $t_i^1$ and $t_i^2$ of corresponding part in different directions; $C_i$ represents a three-dimensional coordinate value of a center point of the i-th first sphere in the camera coordinate system; and $R_i$ represents the rotation information of the i-th first sphere in the camera coordinate system.

The position and attitude data $S_i$ of the i-th first sphere satisfies the following formula (1):

$$S_i = R_{parent(i)} \cdot \left( l_i O_i \right) + S_{parent(i)} \qquad (1)$$

where $0_i$ is an offset vector, which represents the offset direction from a parent part corresponding to the i-th first sphere to the current part; $l_i O_i$ represents the local position of the (i)th part of the human body in the key point layout; $S_{parent(i)}$ represents the position and attitude data of the parent part; and $R_{parent(i)}$ represents the rotation information of the parent part corresponding to the i-th first sphere in the camera coordinate system. The above formula (1) constrains the connection relationship between different first spheres.

When the first sphere position information of each of multiple first spheres in the camera coordinate system is acquired, for example, a pre-trained position information prediction network may be utilized to perform position information prediction processing on the first image to obtain the first sphere position information of each first sphere of the multiple first spheres in the camera coordinate system.

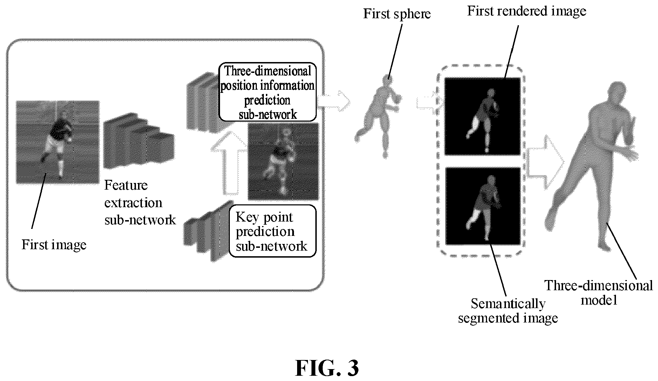

Exemplarily, with reference to FIG. 3, an embodiment of the disclosure further provides an example of a structure of a position information prediction network, which a feature extraction sub-network, a key point prediction sub-network, and a three-dimensional position information prediction sub-network.

Here, the feature extraction sub-network is configured to perform feature extraction on the first image to obtain a feature map of the first image.

Here, the feature extraction sub-network includes, for example, a convolutional neural network (CNN) capable of performing at least one stage of feature extraction on the first image to obtain the feature map of the first image. The process of performing the at least one stage of feature extraction on the first image by the CNN may further be considered as the process of encoding the first image by utilizing a CNN encoder.

The key point prediction sub-network is configured to determine two-dimensional coordinate values of multiple key points of the first object in the first image based on the feature map of the first image.

Here, the key point prediction sub-network, for example, may perform at least one stage of deconvolution based on the feature map of the first image to obtain a heat map of the first image. The size of the heat map is, for example, the same as that of the first image; and a pixel value of each first pixel in the heat map represents the probability that a second pixel corresponding to the position of each first pixel in the first image is a key point of the first object. Then, the two-dimensional coordinate values of the multiple key points of the first object in the first image may be obtained by utilizing the heat map.

The three-dimensional position information prediction sub-network is configured to obtain the first sphere position information of the multiple first spheres forming the first object respectively in the camera coordinate system based on the multiple key points of the first object according to the two-dimensional coordinate values in the first image and the feature map of the first image.

In the above S102, after the first sphere position information corresponding to the multiple first spheres is obtained, for example, the first rendered image may be generated in the following manner.

First three-dimensional position information of each vertex of multiple patches forming each first sphere in the camera coordinate system respectively is determined based on the first sphere position information; and the first rendered image is generated based on the first three-dimensional position information of each vertex of multiple patches forming each first sphere in the camera coordinate system respectively.

Here, the patches are the set of vertices and polygons representing polyhedrons in the three-dimensional computer graphics, which are also called an unstructured grid. Based on the determination of the first sphere position information corresponding to the multiple first spheres forming the first object, the first three-dimensional position information of multiple patches forming the first sphere in the camera coordinate system may be determined based on the first sphere position information.

Here, the first three-dimensional position information of each vertex of the multiple patches forming each first sphere in the camera coordinate system is determined based on a first positional relation between template vertices of multiple template patches forming a template sphere and a center point of the template sphere and the first sphere position information of each first sphere.

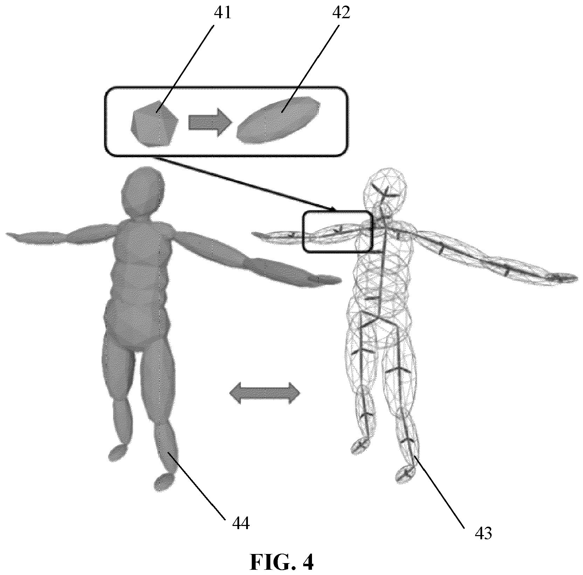

Here, for example, a template sphere is shown as 41 in FIG. 4 and includes multiple template patches. There is a certain positional relation between the template vertex of each template patch and the center point of the template sphere. A first sphere may be obtained based on the deformation from the template sphere; and when the first template sphere is deformed, for example, the template sphere may be transformed in terms of shape and rotation angle based on the lengths corresponding to three coordinate axes of each first sphere and the rotation angle of each first sphere relative to the camera coordinate system; a second positional relation between each template vertex and a center point of the transformed template sphere is determined based on the result of transforming the template sphere in terms of shape and rotation angle, as well as the first positional relation; and the first three-dimensional position information of each vertex of multiple patches forming each first sphere in the camera coordinate system is determined based on the second three-dimensional position information of the center point of each first sphere in the camera coordinate system and the second positional relation.

Here, when the template sphere is transformed in terms of shape and rotation angle, the template sphere may be transformed in terms of shape firstly, such that the three coordinate axes of the template sphere are equal to the lengths of the three coordinate axes of the first sphere; and then, based on the result of transforming the template sphere in terms of shape, the rotation angle is transformed, such that the directions of the three coordinate axes of the template sphere in the camera coordinate system are in one-to-one correspondence with the directions of the three coordinate axes of the first sphere, and then the transformation of the template sphere in terms of shape and rotation angle is completed.

In addition, the template sphere may be transformed in terms of rotation angle firstly, such that the directions of the three axes of the template sphere in the camera coordinate system are in one-to-one correspondence with the directions of the three coordinate axes of the first sphere; and then transformation in terms of shape is performed based on the result of transforming the template sphere in terms of rotation angle, such that the lengths of three coordinate axes of the template sphere are equal to the lengths of three coordinate axes of the first sphere, and then the transformation of the template sphere in terms of shape and rotation angle is completed.

After the transformation of the template sphere in terms of shape and rotation angle is completed, that is, the lengths of three coordinate axes of the template sphere and the rotation angle in the camera coordinate system are determined. Then, the second positional relation between each template vertex of multiple template patches and the center point of the transformed template sphere is determined based on the lengths of the coordinate axes and the rotation angle in the camera coordinate system, and the first positional relation between each template vertex of multiple template patches forming the template sphere and the center point of the template sphere. The three-dimensional position information of each template vertex of multiple template patches in the camera coordinate system is determined based on the second positional relation and the second three-dimensional position information of the center point of each first sphere in the camera coordinate system. At this time, the three-dimensional position information of the template vertices of multiple template patches in the camera coordinate system forms the first three-dimensional position information of multiple vertices of multiple patches forming each first sphere in the camera coordinate system respectively.

Exemplarily, with reference to FIG. 4, an embodiment of the disclosure further provides an example of transforming a template sphere into a first sphere, in which the template sphere is shown as 41 in FIG. 4; the result of transforming the template sphere in terms of shape and rotation angle is shown as 42; 43 and 44 denote a human body formed by multiple first spheres; and 43 illustrates a perspective diagram of the human body formed by the multiple first spheres.

After first three-dimensional position information of multiple vertices of multiple patches of each first sphere in a camera coordinate system is obtained, image rendering is performed on the multiple spheres forming a first object based on the first three-dimensional position information of multiple vertices of multiple patches forming each first sphere in the camera coordinate system respectively to generate a first rendered image.

Here, for example, the image rendering may be performed on the multiple first spheres forming the first object in the following manner.

A part index and a patch index of each pixel in the first rendered image are determined based on the first three-dimensional position information and a camera projection matrix; and

The first rendered image is generated based on the determined part index and patch index of each pixel in the first rendered image.

The part index of a pixel is configured to identify a part of the first object corresponding to the pixel; and the patch index of a pixel is configured to identify a patch corresponding to the pixel.

Here, the camera is a camera configured to acquire the first image; and the projection matrix of the camera may be obtained based on the position of the camera in the camera coordinate system and the first three-dimensional position information of multiple vertices of multiple patches forming each first sphere in the camera coordinate system respectively. After the first camera projection matrix is obtained, multiple first spheres may be mapped into the camera coordinate system based on the projection matrix to obtain the first rendered image.

In a possible implementation, when image rendering is performed on multiple spheres forming the first object, the multiple first spheres are collectively rendered based on first sphere position information corresponding the multiple spheres to obtain the first rendered image including all the first spheres. Then, gradient information of the first rendered image corresponding to all the first spheres is obtained, and the first sphere position information of the multiple first spheres is adjusted based on the gradient information.

In another possible implementation, when image rendering is performed on multiple first spheres forming the first object, each first sphere of the multiple first spheres is rendered respectively to obtain a first rendered image corresponding to each first sphere respectively. Then, gradient information of the first rendered image corresponding to each first sphere respectively is acquired, and the first sphere position of each first sphere is adjusted based on the gradient information of the first rendered image corresponding to each first sphere.

In the above S103, for example, semantic segmentation processing may be performed on the first image by utilizing a pre-trained semantic segmentation network to obtain the semantically segmented image of the first image.

(1) When the multiple first spheres are collectively rendered, the pixel values of corresponding pixels of different first spheres are different when they are rendered to obtain the first rendered image; and then, when the semantic segmentation is performed on the first image to obtain the semantically segmented image of the first image, the pixel value corresponding to each pixel in the semantically segmented image represents a class value of the part to which each pixel at the corresponding position in the first image belongs. Different parts of the first object have different class values in the semantically segmented image.

Exemplarily, the pixel value of a pixel corresponding to a first sphere corresponding to a part when the first sphere is rendered to obtain the first rendered image is the same as the class value corresponding to the part in the semantically segmented image.

(2) When the multiple first spheres are rendered respectively, the semantic segmentation is performed on the first image to obtain the semantically segmented image corresponding to first spheres representing different parts of the first object respectively.

Then, the gradient information of the first rendered image is obtained based on the first rendered image and the semantically segmented image of the first image, for example, in the following manner.

The gradient information of the first rendered image corresponding to each first sphere according to the first rendered image and the semantically segmented image corresponding to each first sphere.

The total gradient information corresponding to the multiple first spheres is obtained based on the gradient inforamtion of the first rendered image corresponding to each first sphere respectively.

Therefore, it is conducive to simplifying the expression of class values corresponding to different parts and simplifying the computational complexity in gradient calculation.

Theoretically, when the obtained first sphere position information corresponding to each first sphere respectively is completely correct, the pixel values of pixels at the corresponding position in the generated first rendered image and in the first semantically segmented image are the same. If an error occurs in the prediction of the first sphere position information of any first sphere, the pixel values of pixels corresponding to at least part of the positions in the first rendered image and the first semantically segmented image may be different.

Based on the above principle, the gradient information of the first rendered image may be determined by the first rendered image and the semantically segmented image of the first image. The gradient information represents the degree of correctness of the first sphere position information of each first sphere of the multiple first spheres in the camera coordinate system. Generally, a larger gradient characterizes lower accuracy of the first sphere position information; and accordingly, a smaller gradient characterizes higher accuracy of the first sphere position information. Therefore, the gradient information of the first rendered image may be utilized to guide the adjustment of the first sphere position information corresponding to each first sphere respectively, such that the obtained first rendered image may be gradually optimized towards the correct direction during the continuous adjustment of the first sphere position information, thereby making the finally generated three-dimensional model of the first object have higher accuracy.

Here, the gradient information of the first rendered image includes the gradient value of each pixel in the first rendered image.

When the first rendered image gradient information is determined, for example, each pixel in the first rendered image may be traversed, and the gradient value of each traversed pixel may be determined according to a first pixel value of each traversed pixel in the first rendered image and a second pixel value of each traversed pixel in the semantically segmented image.

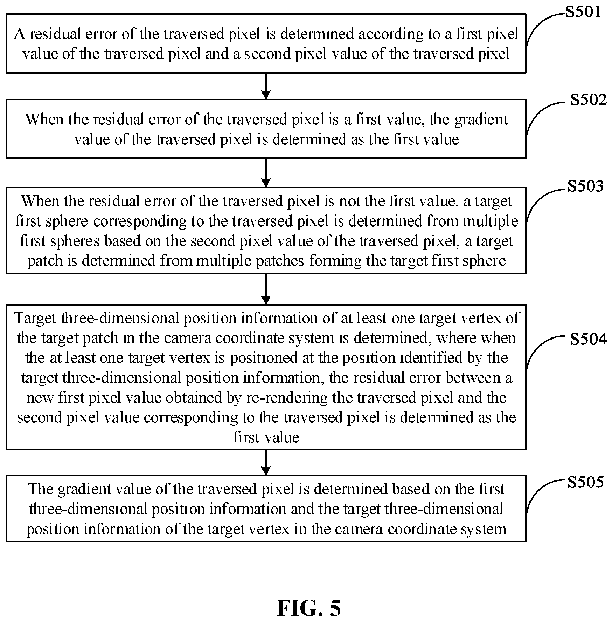

With reference to FIG. 5, an embodiment of the disclosure further provide a method for determining a gradient value of a traversed pixel, which includes the following operations.

At S501, a residual error of the traversed pixel is determined according to a first pixel value of the traversed pixel and a second pixel value of the traversed pixel.

At S502, when the residual error of the traversed pixel is a first value, the gradient value of the traversed pixel is determined as the first value,.

Here, for the traversed pixel, when the first pixel value and the second pixel value of the traversed pixel are equal, the first sphere position information of a first sphere to which a position point with the traversed pixel as a projection point belongs, is considered to be predicted correctly. Here, the position point may be a position point on any patch of a first sphere representing any part of the first object. When the first pixel value and the second pixel value of the traversed pixel are not equal, the first sphere position information of a first sphere to which a position point with the traversed pixel as a projection point belongs, is considered to be predicted erroneously.

In a possible implementation, a first value is, for example, 0.

At S503, when the residual error of the traversed pixel is not the first value, a target first sphere corresponding to the traversed pixel is determined from multiple first spheres based on the second pixel value of the traversed pixel, and a target patch is determined from multiple patches forming the target first sphere.

At S504, target three-dimensional position information of at least one target vertex of the target patch in the camera coordinate system is determined; where when the at least one target vertex is positioned at the position identified by the target three-dimensional position information, the residual error between a new first pixel value obtained by re-rendering the traversed pixel and the second pixel value corresponding to the traversed pixel is determined as the first value.

At S505, the gradient value of the traversed pixel is determined based on the first three-dimensional position information and the target three-dimensional position information of the target vertex in the camera coordinate system.

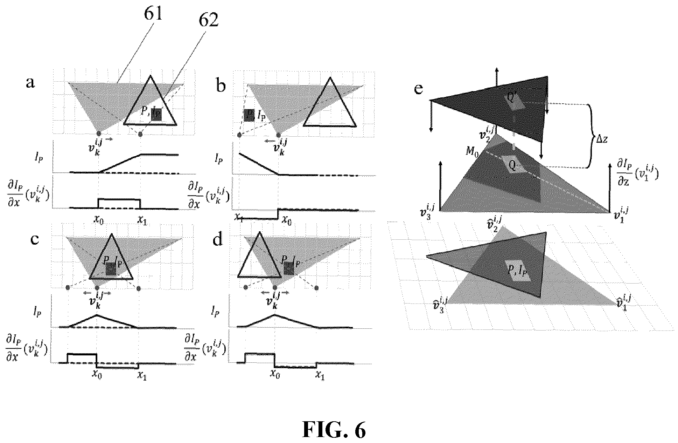

According to some embodiments of the disclosure, with reference to FIG. 6, various examples of determining target three-dimensional position information when the residual error of a traversed pixel is not the first value are provided. In the example, a patch is a triangle patch, i.e., any patch forming a first sphere includes three sides and three vertices.

In the example, a pixel $P$ is a traversed pixel, and the coordinate value of $P$ in the image coordinate system is represented as: $P=(u_P, v_P)$. $I_P(x) \in 0,1$ represents the rendering function of the pixel $P$.

In FIG. 6, 61 denotes a target patch; and the target patch is the j-th patch of a first sphere representing the i-th part of a first object. $v_k^{i,j}$ represents the k-th vertex of the target patch, i.e., a target vertex according to the embodiments of the disclosure.

62 denotes an blocking patch blocking the target patch in the direction in which a camera is positioned, and the patch blocking the target patch and the target patch belong to different first spheres.

As shown in a of FIG. 6, a first pixel value of the pixel *P* is rendered to a first pixel value corresponding to the target patch. In the example, when the pixel *P* is blocked by the blocking patch 62 and the target patch 61 is projected in an image coordinate system, the pixel *P* is not covered. Therefore, when the position of the target vertex $v_k^{i,j}$ is adjusted in either the x-axis direction or the y-axis direction in the camera coordinate system, a new first pixel value obtained by re-rendering the pixel *P* is not the same as the first pixel value corresponding to the target patch. Therefore, as shown in a and e of FIG. 6, the target vertex $v_k^{i,j}$ may be firstly moved in the x-axis direction in the camera coordinate system, and the pixel *P* may be covered when the target patch is projected into the image coordinate system, and then the position of the target vertex $v_k^{i,j}$ is adjusted in the z-axis direction, such that a position point Q projected to the pixel *P* in the target patch may be positioned in front of the blocking patch (relative to the position at which the camera is positioned), and the target three-dimensional position information of the target vertex $v_k^{i,j}$ in the camera coordinate system is obtained.

Here, the gradient value of the pixel *P* satisfies the following formulas (2) and (3):

$$\frac{\partial I_P}{\partial x}\left(v_{k\in1,2,3}^{i,j}\right) = \frac{\delta I_P}{x_0 - x_1} \tag{2}$$

$$\frac{\partial I_P}{\partial z}\left(v_k^{i,j}\right) = \lambda \cdot \delta I_P \cdot \log\left(\frac{\Delta\left(M_0,Q\right)}{\Delta\left(M_0,v_k^{i,j}\right)\cdot\Delta z} + 1\right) \tag{3}$$

where $\frac{\partial I_P}{\partial x}\left(v_{k\in1,2,3}^{i,j}\right)$ represents the gradient value of the pixel *P* in the x-axis direction and $\frac{\partial I_P}{\partial z}\left(v_k^{i,j}\right)$ represents the gradient value of the pixel *P* in the z-axis direction. The gradient value of the pixel *P* in the y-axis direction is 0.

In the above formulas (2) and (3), $\delta I_P$ represents the residual error of the pixel *P* . $x_0$ represents the coordinate value of the target vertex $v_k^{i,j}$ in the x-axis before the target vertex $v_k^{i,j}$ moves along the x-axis direction; and $x_1$ represents the coordinate value of the target vertex $v_k^{i,j}$ in the x-axis after the target vertex $v_k^{i,j}$ moves along the x-axis direction.

$\Delta z = z_0 - z_1$ represents the depth difference between the position point Q projected to the pixel P in the target patch and a position point Q' projected to the pixel P in the blocking patch, $z_0$ represents the depth value of Q, $z_1$ represents the depth value of Q', and the connecting line between $v_1^{i,j}$ and Q intersects with the connecting line between $v_2^{i,j}$ and $v_3^{i,j}$ at $M_0$. $\lambda$ represents a hyperparameter. $\Delta(.,.)$ represents the distance between two points.

In e of FIG. 6, $\hat{v}_1^{i,j}$ , $\hat{v}_2^{i,j}$ and $\hat{v}_3^{i,j}$ represent projection points of $v_1^{i,j}$ , $v_2^{i,j}$ and $v_3^{i,j}$ in the image coordinate system respectively.

In b of FIG. 6, the first pixel value of the pixel *P* is rendered to the first pixel value corresponding to the target patch. In the example, the pixel *P* is not blocked by the blocking patch 62, therefore, only the position of the target vertex $v_k^{i,j}$ is required to be moved along the x-axis direction of the camera coordinate system, a new first pixel value obtained by re-rendering the pixel *P* is the same as the first pixel value corresponding to the target patch. Therefore, as shown in b of FIG. 6, the target vertex $v_k^{i,j}$ may be moved in the x-axis direction in the camera coordinate system, such that the pixel $P$ is covered when the target patch is projected in the image coordinate system, and the target three-dimensional position information of the target vertex $v_k^{i,j}$ in the camera coordinate system may be obtained.

In this case, the gradient value of the pixel $P$ satisfies the above formula (2), and the gradient values of the pixel $P$ in the z-axis direction and the y-axis direction are both 0.

In c of FIG. 6, the first pixel value of the pixel $P$ is rendered to the first pixel value corresponding to the target patch. In the example, when the pixel $P$ is blocked by the blocking patch 62, and the target patch 61 is projected in the image coordinate system, the pixel $P$ is covered. Therefore, the positions of the target vertex $v_k^{i,j}$ in the x-axis direction and the y-axis direction of the camera coordinate system are not required to be adjusted, and only the position of the target vertex $v_k^{i,j}$ in the z-axis direction is required to be adjusted according to e in FIG. 6, such that the position point Q projected to the pixel $P$ in the target patch may be positioned in front of the blocking patch (relative to the position of the camera), and then the three-dimensional position information of the target vertex $v_k^{i,j}$ in the camera coordinate system is obtained.

In this case, the gradient value of the pixel $P$ satisfies the above formula (3), and the gradient values of the pixel $P$ in both the x-axis direction and the y-axis direction are 0.

In d of FIG. 6, the first pixel value of the pixel $P$ is rendered to a first pixel value different from that of the target patch. In the example, when the pixel is not blocked by the blocking patch 62, and the target patch 61 is projected in the image coordinate system, the pixel $P$ is covered. At this time, the position of the target vertex $v_k^{i,j}$ is required to be moved along the x-axis direction of the camera coordinate system, a new first pixel value obtained by re-rendering the pixel $P$ is different from the first pixel value corresponding to the target patch. Therefore, in this case, as shown in d of FIG. 6, the target vertex $v_k^{i,j}$ may be moved in the x-axis direction in the camera coordinate system, such that the pixel $P$ is not covered when the target patch is projected in the image coordinate system, and the target three-dimensional position information of the target vertex $v_k^{i,j}$ in the camera coordinate system is obtained.

In this case, the gradient value of the pixel $P$ satisfies the above formula (2), and the gradient values of the pixel $P$ in the y-axis direction and the z-axis direction are both 0.

By adopting the foregoing method, the gradient value of each pixel in the first rendered image may be obtained; and the gradient values of all pixels in the first rendered image form the gradient information of the first rendered image.

In the above S104, when the first sphere position information of each first sphere is adjusted based on the gradient information of the first rendered image, for example, at least one item of the first sphere position information of each first sphere may be adjusted, and at least one item of the second three-dimensional position information of the center point of each first sphere in the camera coordinate system, the lengths corresponding to the three coordinate axes of each first sphere respectively, and the rotation angle of each first sphere relative to the camera coordinate system may also be adjusted, such that in a new first rendered image generated based on the adjusted first sphere position information, the gradient value of each pixel changes towards the first value, such that the first sphere position information may be gradually approximate to the true values through multiple iterations, and the accuracy of the first sphere position information is improved, and finally the accuracy of the three-dimensional model of the first object is improved.

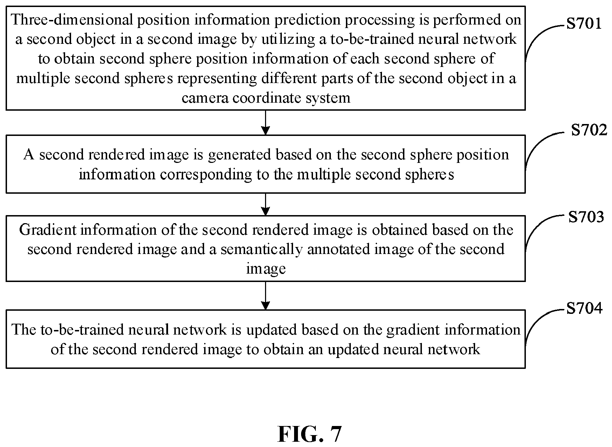

With reference to FIG. 7, an embodiment of the disclosure further provides a neural network generation method, which the following operations.

At S701, three-dimensional position information prediction processing is performed on a second object in a second image by utilizing a to-be-trained neural network to obtain second sphere position information of each second sphere of multiple second spheres representing different parts of the second object in a camera coordinate system.

At S702, a second rendered image is generated based on the second sphere position information corresponding to the multiple second spheres.

At S703, gradient information of the second rendered image is obtained based on the second rendered image and a semantically annotated image of the second image.

At S704, the to-be-trained neural network is updated based on the gradient information of the second rendered image to obtain an updated neural network.

FIG. 3 illustrates the structure of the neural network according to the embodiment of the disclosure, which will not be repeated here.

According to the embodiment of the disclosure, the three-dimensional position information prediction processing is performed on the second object in the second image by utilizing the to-be-optimized neural network, based on obtaining the second sphere position information of the multiple second spheres representing the three-dimensional model of the second object in the second image, image rendering is performed based on the second sphere position information, the gradient information representing the degree of correctness of the second sphere position information of the multiple second spheres is determined based on the result of the image rendering, and the to-be-optimized neural network is updated based on the gradient information to obtain the optimized neural network, such that the optimized neural network has higher accuracy in the prediction of the three-dimensional position information.

The implementation process of the above S702 is similar to that of the above S102; and the implementation process of the above S703 is similar to that of the above S103, which will not be repeated here.

In the above S704, when the to-be-trained neural network is updated based on the gradient information of the second rendered image, the new second sphere position information is obtained by utilizing the updated neural network, the gradient value of each pixel changes towards the first value in a new second rendered image obtained based on the new second sphere position information, and the accuracy of the neural network in predicting the second sphere position information may be gradually improved by optimizing the neural network for multiple times.

It can be seen from the above contents, according to the embodiments of the disclosure, the gradient of a certain pixel may be transferred to the Euclidean coordinates of a node on three-dimensional grid, i.e., the shape of the three-dimensional object model may be corrected by utilizing image information such as object contour and part semantic segmentation. An application scenario of the embodiments of the disclosure will be described below.

1. Forward propagation: from three-dimensional model grid to image pixels.

According to given camera parameters, the projection of each triangle patch (the foregoing patch) on the image plane is calculated according to the imaging principle of a pinhole camera; for each pixel on the image plane an index of a ptach closest to the camera in the area in which the pixel is positioned is calculated (i.e., in complete rendering, this pixel is obtained from rendering which triangle patch); and an image in which each pixel stores the index of the corresponding patch is a triangle face index. Here, whether a pixel (u, v) belongs to the i-th part is represented by $A^i(u,v)$, which is referred to as an element index (the foregoing part index); and a rendered image is generated, and then a portion of pixels are separately extracted from the complete rendered image for each element (the foregoing part), where the coordinates of the portion of extracted pixels in the part indexes belong to the current element.

2. Back propagation: gradients of pixels transmitted back to nodes of three-dimensional grid;

Since the situation is the same for x-direction and y-direction, the situation that the gradients are transmitted back in the x-direction is taken as an example for illustration. A pixel value may be RGB value, gray value, brightness value and binary value. Here, taking the binary value as an example, i.e., 1 represents "visible" and 0 represents "invisible". The gradient of each pixel is either positive (from 0 to 1) or negative (from 1 to 0). In order to correlate the Euclidean coordinates of the nodes (the foregoing vertices) with the gradients of the pixels, it is considered here that the value of each pixel changes linearly, rather than abruptly when a node is moved. When blocking does not exist, for example, as shown in a of FIG. 6, when $v_k^{i,j}$ (representing the k-th vertex of a target patch) moves to the right, one side of the triangle (the foregoing target patch) covers the pixel P, $I_P$ changes from 0 to 1, such that $I_P$ changes with x as shown by a black solid line in a first line chart in the lower portion of a of FIG. 6, and then the gradient of the node, $\dfrac{\partial I_P}{\partial z}\left(v_k^{i,j}\right)$ is the slope of the change, as shown by a black solid line in a second line chart in the lower portion of a of FIG. 6. When a pixel is inside a triangle patch, $v_k^{i,j}$ moves in the x-direction, and $I_P$ changes from 1 to 0, as shown in c of FIG. 6. Then, the gradients of the node $v_k^{i,j}$ are different in the left direction and right direction. To sum up, when $\dfrac{\partial I_P}{\partial z}\left(v_k^{i,j}\right)$ represents the gradient of the node k, which belongs to the j-th triangle patch of the i-th part, the above formula (2) works. When blocking exists, due to part-level rendering, if the current part is blocked by another part, the corresponding value is not rendered, such that regardless whether the part covers the pixel or not, the value of the pixel is 0 in the rendered image of the part. With reference to FIG. 6, the patch 62 does not belong to the triangle patch of the current part, but the patch 62 is the triangle patch closest to the camera plane, such that the gradient does not change when pixel P is positioned inside the patch 62, i.e., the gradient is constantly equal to 0, as shown by the dotted lines in all line charts in FIG. 6.

3. All the pixels are traversed according to the foregoing part 1 and part 2, and the values of the gradients of the traversed pixels transmitted back to the nodes of the three-dimensional model are calculated; when gradients of multiple pixels are transmitted back to a node, all gradients are accumulated; a parallel acceleration method may be adopted herein for acceleration, for example, cuda or CPUs in parallel may be adopted to calculate each pixel independently; and finally, with given supervision information, the gradients of the nodes of the three-dimensional model are obtained in this way.

According to the method, the used supervision information is no longer limited to complete rendered images, and the semantic segmentation of an object may be utilized as the supervision information. When multiple objects are rendered together, different objects may further be considered as different parts and rendered independently, such that the positional relation between different objects may be known.

Those skilled in the art should understand that, according to the method, the sequence of writing the steps does not imply a strict sequence of execution and should not limit the implementations, and the sequence of execution of the steps should be determined by the functions and possible inherent logic thereof.

Based on the same inventive concept, an embodiment of the disclosure further provides a three-dimensional model generation apparatus corresponding to the three-dimensional model generation method. Due to the fact that the device according to the embodiment of the disclosure is similar to the three-dimensional model generation method according to the foregoing embodiments of the disclosure, the implementation of the device may refer to the implementation of the method, and the same parts will not be repeated herein.

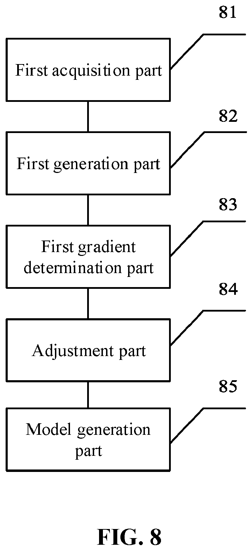

FIG. 8 illustrates a schematic diagram of a three-dimensional model generation apparatus according to an embodiment of the disclosure. The apparatus includes: a first acquisition part 81, a first generation part 82, a first gradient determination part 83, an adjustment part 84, and a model generation part 85.

The first acquisition part 81 is configured to acquire first sphere position information of each first sphere in a camera coordinate system based on a first image including the first object, where the multiple first spheres represent different parts of the first object respectively.

The first generation part 82 is configured to generate a first rendered image based on the first sphere position information of the multiple first spheres.

The first gradient determination part 83 is configured to obtain gradient information of the first rendered image based on the first rendered image and a semantically segmented image of the first image

The adjustment part 84 is configured to adjust the first sphere position information of the multiple first spheres based on the gradient information of the first rendered image.

The model generation part 85 is configured to generate a three-dimensional model of the first object by utilizing the adjusted first sphere position information of the multiple first spheres.

According to some embodiments of the disclosure, when a first rendered image is generated based on first sphere position information of multiple first spheres, a first generation part 82 is configured to: determine first three-dimensional position information of each vertex of multiple patches forming each first sphere in a camera coordinate system respectively based on the first sphere position information; and generate the first rendered image based on the first three-dimensional position information of each vertex of multiple patches forming each first sphere in the camera coordinate system respectively.

According to some embodiments of the disclosure, when first three-dimensional position information of each vertex of multiple patches forming each first sphere in a camera coordinate system is determined based on first sphere position information, the first generation part 82 is configured to: determine the first three-dimensional position information of each vertex of multiple patches forming each first sphere in the camera coordinate system based on a first positional relation between template vertices of multiple template patches forming a template sphere and a center point of the template sphere, as well as the first sphere position information of each first sphere.

According to some embodiments of the disclosure, the first sphere position information of each first sphere includes: second three-dimensional position information of a center point of each first sphere in a camera coordinate system, lengths corresponding to three coordinate axes of each first sphere respectively, and the rotation angle of each first sphere relative to the camera coordinate system.

According to some embodiments of the disclosure, when first three-dimensional position information of each vertex of multiple patches forming each first sphere in a camera coordinate system is determined based on a first positional relation between template vertices of multiple template patches forming a template sphere and a center point of the template sphere, as well as the first sphere position information of each first sphere, the first generation part 82 is configured to: transform the template sphere in terms of shape and rotation angle based on the lengths corresponding to the three coordinate axes of each first sphere respectively and the rotation angle of each first sphere relative to the camera coordinate system; determine a second positional relation between each template vertex and a center point of the transformed template sphere based on the result of transforming the template sphere in terms of shape and rotation angle, as well as the first positional relation; and determine the first three-dimensional position information of each vertex of multiple patches forming each first sphere in the camera coordinate system based on the second three-dimensional position information of the center point of each first sphere in the camera coordinate system and the second positional relation.

According to some embodiments of the disclosure, the first acquisition part 81 is further configured to: acquire a camera projection matrix of a first image.

When the first rendered image is generated based on first three-dimensional position information of each vertex of multiple patches forming each first sphere in a camera coordinate system, the first generation part 82 is configured to: determine a part index and a patch index of each pixel in the first rendered image based on the first three-dimensional position information and the projection matrix; and generate the first rendered image based on the determined part index and patch index of each pixel in the first rendered image.

The part index of a pixel is configured to identify a part of the first object corresponding to the pixel; and the patch index of a pixel is configured to identify a patch corresponding to the pixel.

According to some embodiments of the disclosure, when a first rendered image is generated based on first three-dimensional position information of each vertex of multiple patches forming each first sphere in a camera coordinate system respectively, the first generation part 82 is configured to: for each first sphere, generate the first rendered image corresponding to each first sphere according to the first three-dimensional position information of each vertex of the multiple patches forming each first sphere in the camera coordinate system respectively.

When the gradient information of the first rendered image is obtained based on the first rendered image and the semantically segmented image of the first image, the first gradient determination part 83 is configured to: for each first sphere, obtain the gradient information of the first rendered image corresponding to each first sphere according to the first rendered image and the semantically segmented image corresponding to each first sphere.

According to some embodiments of the disclosure, first rendered image gradient information includes: a gradient value of each pixel in a first rendered image.

When the gradient information of the first rendered image is obtained based on a first rendered image and the semantically segmented image of the first image, the first gradient determination part 83 is configured to: traverse each pixel in the first rendered image, and determine the gradient value of each traversed pixel according to a first pixel value of each traversed pixel in the first rendered image and a second pixel value of each traversed pixel in the semantically segmented image.

According to some embodiments of the disclosure, when the gradient value of each traversed pixel is determined according to a first pixel value of each traversed pixel in a first rendered image and a second pixel value of each traversed pixel in a semantically segmented image, the first gradient determination part 83 is configured to: determine a residual error of each traversed pixel according to the first pixel value of each traversed pixel and the second pixel value of each traversed pixel; when the residual error of each traversed pixel is a first value determine the gradient value of each traversed pixel as the first value; when the residual error of each traversed pixel is not the first value, determine a target first sphere corresponding to each traversed pixel from the multiple first spheres based on the second pixel value of each traversed pixel, and determine a target patch from multiple patches forming the target first sphere; determine target three-dimensional position information of at least one target vertex of the target patch in the camera coordinate system, where when the at least one target vertex is positioned at the position identified by the target three-dimensional position information, the residual error between a new first pixel value obtained by re-rendering each traversed pixel and the second pixel value is determined corresponding to each traversed pixel as the first value; and obtain the gradient value of each traversed pixel based on first three-dimensional position information and the target three-dimensional position information of the target vertex in the camera coordinate system.

According to some embodiments of the disclosure, when first sphere position information of each first sphere of the multiple first spheres in a camera coordinate system is obtained based on a first image including a first object, the first acquisition part 81 is configured to: perform position information prediction processing on the first image by utilizing a pre-trained position information prediction network to obtain the first sphere position information of each first sphere of the multiple first spheres in the camera coordinate system.

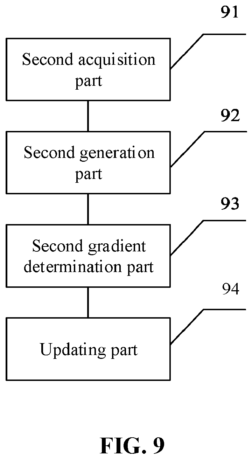

With reference to FIG. 9, an embodiment of the disclosure further provides a neural network generation apparatus, which includes the following parts.

A second acquisition part 91 is configured to perform three-dimensional position information prediction processing on a second object in a second image by utilizing a to-be-trained neural network to obtain second sphere position information of each second sphere of multiple second spheres representing different parts of the second object in a camera coordinate system.

A second generation part 92 is configured to generate a second rendered image based on the second sphere position information corresponding to the multiple second spheres respectively.

A second gradient determination part 93 is configured to obtain gradient information of the second rendered image based on the second rendered image and a semantically annotated image of the second image.

The updating part 94 is configured to update the to-be-trained neural network based on the gradient information of the second rendered image to obtain an updated neural network.

The process of each part of the device and the interaction between different parts may refer to relevant descriptions of the foregoing embodiments of the method, which will not be described in detail here.

According to the embodiments and other embodiments of the disclosure, a "part" may be a part of a circuit, a part of a processor, a part of a program or software, etc., and definitely the "part" may further be a unit, modular or non-modular.

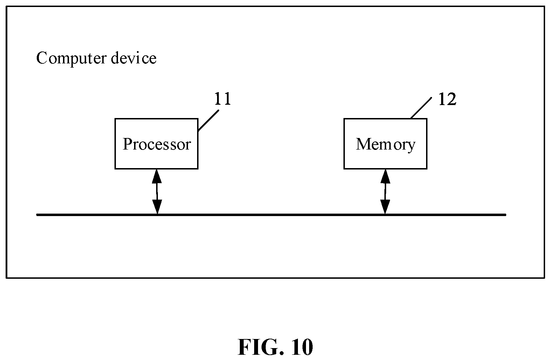

An embodiment of the disclosure further provides a computer device, as shown in FIG. 10. FIG. 10 illustrates a schematic structural diagram of the computer device according to an embodiment of the disclosure, which includes a processor 11 and a memory 12.

The memory 12 being configured to store machine-readable instructions which may be executed by the processor 11, and when the computer device is run, the machine-readable instructions being executed by the processor to implement the following steps.

First sphere position information of each first sphere of multiple first spheres in a camera coordinate system is acquired based on a first image including a first object, where the multiple first spheres are configured to represent different parts of the first object respectively.

A first rendered image is generated based on the first sphere position information of the multiple first spheres.

Gradient information of the first rendered image is obtained based on the first rendered image and a semantically segmented image of the first image.

The first sphere position information of the multiple first spheres is adjusted based on the gradient information of the first rendered image, and a three-dimensional model of the first object is generated by utilizing the adjusted first sphere position information of the multiple first spheres.

Alternatively, the machine-readable instructions are executed by the processor to implement the following steps.

Three-dimensional position information prediction processing is performed on a second object in a second image by utilizing a to-be-trained neural network to obtain second sphere position information of each second sphere of multiple second spheres representing different parts of the second object in a camera coordinate system.

A second rendered image is generated based on the second sphere position information corresponding to multiple second spheres respectively.

Gradient information of the second rendered image is obtained based on the second rendered image and a semantically annotated image of the second image.

The to-be-trained neural network is updated based on the gradient information of the second rendered image to obtain an updated neural network.

The execution process of the foregoing instructions may refer to the steps of the three-dimensional model generation method and the method for generating the neural network according the embodiments of the disclosure, which will not be repeated herein.

An embodiment of the disclosure further provides a computer-readable storage medium, in which a computer program is stored. When the computer program is run by a processor, the steps of a three-dimensional model generation method or a neural network generation method according to the foregoing embodiments are executed. The storage medium may be a volatile or non-volatile computer-readable storage medium.

An embodiment of the disclosure provides a computer program product for a three-dimensional model generation method or a neural network generation method, including a computer-readable storage medium storing program codes. The program codes include instructions which may be configured to execute the steps of the three-dimensional model generation method or the method for generating the neural network according to the foregoing embodiments, which may refer to the foregoing embodiments and will not be repeated herein.

An embodiment of the disclosure further provides a computer program. When the computer program is executed by a processor, any of the methods according to the foregoing embodiments may be implemented. The computer program product may be implemented in terms of hardware, software, or a combination thereof. According to an alternative embodiment, a computer program product may be implemented as a computer storage medium, and according to another alternative embodiment, a computer program product may be implemented as a software product, such as an SDK (Software Development Kit), etc.

An embodiment of the disclosure further provides a computer program, which includes computer-readable codes. When the computer-readable codes are run in an electronic device, a processor in the electronic device executes a three-dimensional model generation method or a neural network generation method according to the foregoing embodiments.

According to the embodiments of the disclosure, in the task of reconstructing a three-dimensional, the accuracy of a reconstructed model can be optimized, and the ambiguity generated by the self-blocking of the high-degree-of-freedom model is reduced. Moreover, in the deep learning, an image and the three-dimensional space can be connected according to the embodiments of the disclosure, thereby improving the accuracy of semantic segmentation, three-dimensional reconstruction and other tasks.

Those skilled in the art should understand that, for convenience and conciseness of the descriptions, the work processes of the foregoing systems and devices may refer to the corresponding processes of the methods according to the foregoing embodiments and will not be repeated herein. According to the embodiments of the disclosure, it should be understood that the disclosed systems, devices and methods may be implemented in other ways. The foregoing embodiments of the devices are merely for illustration, for example, the units are merely classified according to the logical functions thereof, and may be classified in another way in actual application; and for example, multiple units or components may be combined or integrated into another system, or some features may be ignored or not implemented. On the other hand, the "coupling" or "direct coupling" or "communication connection" shown or discussed herein may be "indirect coupling" or "indirect communication connection" through some communication interfaces, devices or units, which may be implemented in electrical, mechanical or other forms.

The units, illustrated as separate components, may or may not be physically separated, and the components displayed as units may or may not be physical units, i.e., the components may be positioned in one place, or may be distributed over multiple network units. Part or all of the units may be selected according to actual needs to achieve the objectives of the embodiments.

In addition, the functional units according to the embodiments of the disclosure may be integrated in one processing unit, or each unit may exist physically alone, or two or more units may be integrated in one unit.

The functions, if implemented in the form of software functional units and sold or utilized as a product alone, may be stored in a non-volatile computer-readable storage medium which may be executed by a processor. Thereon, the technical schemes of the disclosure or part of contributes thereof to the prior art or part of the technical schemes may be implemented in the form of a software product in essence. The computer software product is stored in a storage medium and includes multiple instructions configured to enable a computer device (which may be a personal computer, server, network device, etc.) to execute all or part of the steps of the methods according to the embodiments of the disclosure. The foregoing storage medium may be a USB flash disk, a portable hard drive, a ROM (Read-Only Memory), a RAM (Random Access Memory), a diskette or a CD and another medium capable of storing program codes.

Finally, it should be noted that: the foregoing embodiments are merely specific embodiments of the disclosure to illustrate the technical schemes of the disclosure, and are not intended to limit the disclosure, and the scope of the disclosure is not limited thereto. Although the disclosure has been described in detail with reference to the foregoing embodiments, those of ordinary skill in the art should understand that modification, variations to the technical schemes and equivalent substitutions for some technical features according to the foregoing embodiments may be made by those skilled in the art within the technical scope of the disclosure. However, the modifications, variations and substitutions do not depart from the spirit and scope of the embodiments disclosed herein, which should fall within the scope of the disclosure. Therefore, the scope of the disclosure should be defined by the scope of the claims.

INDUSTRIAL APPLICABILITY

The embodiments of the disclosure provide a three-dimensional model generation method and apparatus, and a neural network generation method and apparatus. The three-dimensional model generation method includes the following steps: acquiring first sphere position information of each of multiple first sphere in a camera coordinate system based on a first image including a first object, and the first spheres being configured to represent different parts of the first object respectively; generating a first rendered image based on the first sphere position information of the multiple first spheres; obtaining first rendered image gradient information based on the first rendered image and a semantically segmented image of the first image; and adjusting the first sphere position information of the multiple first spheres based on the first rendered image gradient information, and generating a three-dimensional model of the first object by utilizing the adjusted first sphere position information of the multiple first spheres. The three-dimensional model generated by the method according to the embodiments of the disclosure has higher accuracy.

**Claims**

1. A three-dimensional model generation method, comprising:

    acquiring first sphere position information of each first sphere of a plurality of first spheres in a camera coordinate system based on a first image comprising a first object, wherein the plurality of first spheres is configured to represent different parts of the first object respectively;
    generating a first rendered image based on the first sphere position information of the plurality of first spheres;
    obtaining gradient information of the first rendered image based on the first rendered image and a semantically segmented image of the first image; and
    adjusting the first sphere position information of the plurality of first spheres based on the gradient information of the first rendered image, and generating a three-dimensional model of the first object by utilizing the adjusted first sphere position information of the plurality of first spheres.

2. The three-dimensional model generation method of claim 1, wherein generating the first rendered image based on the first sphere position information of the plurality of first spheres comprises:

    determining first three-dimensional position information of each vertex of a plurality of patches forming the each first sphere in the camera coordinate system respectively based on the first sphere position information; and
    generating the first rendered image based on first three-dimensional position information of the each vertex of the plurality of patches forming the each first sphere in the camera coordinate system respectively.

3. The three-dimensional model generation method of claim 2, wherein determining the first three-dimensional position information of the each vertex of the plurality of patches forming the each first sphere in the camera coordinate system respectively based on the first sphere position information comprises:
determining the first three-dimensional position information of the each vertex of the plurality of patches forming the each first sphere in the camera coordinate system respectively based on a first positional relation between template vertices of a plurality of template patches forming a template sphere and a center point of the template sphere, as well as the first sphere position information of the each first sphere.

4. The three-dimensional model generation method of claim 3, wherein the first sphere position information of the each first sphere comprises: second three-dimensional position information of a center point of the each first sphere in the camera coordinate system, lengths corresponding to three coordinate axes of the each first sphere respectively, and a rotation angle of the each first sphere relative to the camera coordinate system.

5. The three-dimensional model generation method of claim 4, wherein determining the first three-dimensional position information of the each vertex of the plurality of patches forming the each first sphere in the camera coordinate system respectively based on the first positional relation between the template vertices of the plurality of template patches forming the template sphere and the center point of the template sphere, as well as the first sphere position information of the each first sphere comprises:

transforming the template sphere in terms of shape and rotation angle based on the lengths corresponding to the three coordinate axes of the each first sphere respectively and the rotation angle of the each first sphere relative to the camera coordinate system;
determining a second positional relation between the each template vertex and a center point of the transformed template sphere based on a result of transforming the template sphere in terms of shape and rotation angle, as well as the first positional relation; and
determining the first three-dimensional position information of the each vertex of the plurality of patches forming the each first sphere in the camera coordinate system respectively based on the second three-dimensional position information of the center point of the each first sphere in the camera coordinate system and the second positional relation.

6. The three-dimensional model generation method of any one of claims 2 to 5, wherein the method further comprises:

acquiring a camera projection matrix of the first image; wherein generating the first rendered image based on the first three-dimensional position information of the each vertex of the plurality of patches forming the each first sphere in the camera coordinate system respectively comprises:
determining a part index and a patch index of each pixel in the first rendered image based on the first three-dimensional position information and the projection matrix; and
generating the first rendered image based on the determined part index and patch index of the each pixel in the first rendered image, wherein the part index of a pixel is configured to identify a part of the first object corresponding to the pixel; and the patch index of a pixel is configured to identify a patch corresponding to the pixel.

7. The three-dimensional model generation method of any one of claims 2 to 6, wherein generating the first rendered image based on the first three-dimensional position information of the each vertex of the plurality of patches forming the each first sphere in the camera coordinate system respectively comprises:

for the each first sphere, generating the first rendered image corresponding to the each first sphere according to the first three-dimensional position information of the each vertex of the plurality of patches forming the each first sphere in the camera coordinate system respectively; wherein obtaining the gradient information of the first rendered image based on the first rendered image and the semantically segmented image of the first image comprises:
for the each first sphere, obtaining the gradient information of the first rendered image corresponding to the each first sphere according to the first rendered image and the semantically segmented image corresponding to the each first sphere.

8. The three-dimensional model generation method of any one of claims 1 to 7, wherein the gradient information of the first rendered image comprises: a gradient value of each pixel in the first rendered image; wherein obtaining the gradient information of the first rendered image based on the first rendered image and the semantically segmented image of the first image comprises:

traversing the each pixel in the first rendered image, and determining the gradient value of the each traversed pixel based on a first pixel value of the each traversed pixel in the first rendered image and a second pixel value of the each traversed pixel in the semantically segmented image.

9. The three-dimensional model generation method of claim 8, wherein determining the gradient value of the each traversed pixel based on the first pixel value of the each traversed pixel in the first rendered image and the second pixel value of the each traversed pixel in the semantically segmented image comprises:

determining a residual error of the each traversed pixel according to the first pixel value of the each traversed pixel and the second pixel value of the each traversed pixel;

in a case where the residual error of the each traversed pixel is a first value, determining the gradient value of the each traversed pixel as the first value;

in a case where the residual error of the each traversed pixel is not the first value, determining a target first sphere corresponding to the each traversed pixel from the plurality of first spheres based on the second pixel value of the each traversed pixel, and determining a target patch from the plurality of patches forming the target first sphere;

determining target three-dimensional position information of at least one target vertex of the target patch in the camera coordinate system, wherein in a case where the at least one target vertex is positioned at a position identified by the target three-dimensional position information, the residual error between a new first pixel value obtained by re-rendering the each traversed pixel and the second pixel value corresponding to the each traversed pixel is determined as the first value; and

obtaining the gradient value of the each traversed pixel based on first three-dimensional position information and the target three-dimensional position information of the target vertex in the camera coordinate system.

10. The three-dimensional model generation method of any one of claims 1 to 9, wherein acquiring the first sphere position information of the each first sphere of the plurality of first spheres in the camera coordinate system based on the first image comprising the first object comprises:

performing position information prediction processing on the first image by utilizing a pre-trained position information prediction network to obtain the first sphere position information of the each first sphere of the plurality of first spheres in the camera coordinate system.

11. A neural network generation method, comprising:

performing three-dimensional position information prediction processing on a second object in a second image by utilizing a to-be-trained neural network to obtain second sphere position information of each second sphere of a plurality of second spheres representing different parts of the second object in a camera coordinate system;

generating a second rendered image based on the second sphere position information corresponding to the plurality of second spheres respectively;

obtaining gradient information of the second rendered image based on the second rendered image and a semantically annotated image of the second image; and

updating the to-be-trained neural network based on the gradient information of the second rendered image to obtain an updated neural network.

12. A three-dimensional model generation apparatus, comprising:

a first acquisition part, configured to acquire first sphere position information of each first sphere of a plurality of first spheres in a camera coordinate system based on a first image comprising a first object, wherein the plurality of first spheres is configured to represent different parts of the first object respectively;

a first generation part, configured to generate a first rendered image based on the first sphere position information of the plurality of first spheres;

a first gradient determination part, configured to obtain gradient information of the first rendered image based on the first rendered image and a semantically segmented image of the first image;

an adjustment part, configured to adjust the first sphere position information of the plurality of first spheres based on the gradient information of the first rendered image; and

a model generation part, configured to generate a three-dimensional model of the first object by utilizing the adjusted first sphere position information of the plurality of first spheres.

13. A neural network generation apparatus, comprising:

a second acquisition part, configured to perform three-dimensional position information prediction processing on a second object in a second image by utilizing a to-be-trained neural network to obtain second sphere position information of each second sphere of a plurality of second spheres representing different parts of the second object in a camera coordinate system;

a second generation part, configured to generate a second rendered image based on the second sphere position information corresponding to the plurality of second spheres respectively;

a second gradient determination part, configured to obtain gradient information of the second rendered image based on the second rendered image and a semantically annotated image of the second image; and

an updating part, configured to update the to-be-trained neural network based on the gradient information of the second rendered image to obtain an updated neural network.

14. An electronic device, comprising a processor and a memory, wherein the memory is configured to store machine-readable instructions which are executable by the processor, and the processor is configured to execute the machine-readable instructions stored in the memory, wherein when the machine-readable instructions are executed by the processor, the processor executes the steps of the method of any one of claims 1 to 11.

15. A computer-readable storage medium, wherein the computer-readable storage medium has a computer program stored thereon, wherein when the computer program is run by an electronic device, the electronic device executes the steps of the method of any one of claims 1 to 11.

16. A computer program, comprising computer-readable codes, wherein when the computer-readable codes are run by an electronic device, a processor in the electronic device implements the method of any one of claims 1 to 11.

First sphere position information of each first sphere of multiple first spheres in a camera coordinate system is acquired based on a first image including a first object, where the multiple first spheres are configured to represent different parts of the first object respectively

S101

A first rendered image is generated based on the first sphere position information of the multiple first spheres

S102

Gradient information of the first rendered image based on the first rendered image and a semantically segmented image of the first image

S103

The first sphere position information of the multiple first spheres is adjusted based on the first rendered image gradient information, and a three-dimensional model of the first object is generated by utilizing the adjusted first sphere position information of the multiple first spheres

S104

**FIG. 1**

FIG. 2

**FIG. 3**

FIG. 4

A residual error of the traversed pixel is determined according to a first pixel value of the traversed pixel and a second pixel value of the traversed pixel

S501

When the residual error of the traversed pixel is a first value, the gradient value of the traversed pixel is determined as the first value

S502

When the residual error of the traversed pixel is not the first value, a target first sphere corresponding to the traversed pixel is determined from multiple first spheres based on the second pixel value of the traversed pixel, a target patch is determined from multiple patches forming the target first sphere

S503

Target three-dimensional position information of at least one target vertex of the target patch in the camera coordinate system is determined, where when the at least one target vertex is positioned at the position identified by the target three-dimensional position information, the residual error between a new first pixel value obtained by re-rendering the traversed pixel and the second pixel value corresponding to the traversed pixel is determined as the first value

S504

The gradient value of the traversed pixel is determined based on the first three-dimensional position information and the target three-dimensional position information of the target vertex in the camera coordinate system

S505

**FIG. 5**

**FIG. 6**

Three-dimensional position information prediction processing is performed on a second object in a second image by utilizing a to-be-trained neural network to obtain second sphere position information of each second sphere of multiple second spheres representing different parts of the second object in a camera coordinate system — S701

A second rendered image is generated based on the second sphere position information corresponding to the multiple second spheres — S702

Gradient information of the second rendered image is obtained based on the second rendered image and a semantically annotated image of the second image — S703

The to-be-trained neural network is updated based on the gradient information of the second rendered image to obtain an updated neural network — S704

**FIG. 7**

81

First acquisition part

82

First generation part

83

First gradient
determination part

84

Adjustment part

85

Model generation
part

**FIG. 8**

Second acquisition part — 91

Second generation part — 92

Second gradient determination part — 93

Updating part — 94

**FIG. 9**

Computer device

Processor 11

Memory 12

FIG. 10

## INTERNATIONAL SEARCH REPORT

International application No.

**PCT/CN2021/082485**

### A. CLASSIFICATION OF SUBJECT MATTER

G06T 17/00(2006.01)i

According to International Patent Classification (IPC) or to both national classification and IPC

### B. FIELDS SEARCHED

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 三维, 模型, 对象, 图像, 球体, 相机, 坐标系, 部位, 位置, 梯度, 语义, 分割, 3D, model, object, image, sphere, ellipsoid, camera, coordinate, part, position, gradient, semantic, segmentation

### C. DOCUMENTS CONSIDERED TO BE RELEVANT

| Category* | Citation of document, with indication, where appropriate, of the relevant passages | Relevant to claim No. |
|---|---|---|
| PX | CN 111739159 A (SHANGHAI SHANGTANG INTELLIGENT TECHNOLOGY CO., LTD.) 02 October 2020 (2020-10-02) claims 1-15, description paragraphs [0212]-[0214] | 1-16 |
| X | WANG, Min et al. ,. "EllipBody: A Light-weight and Part-based Representation for Human Pose and Shape Recovery," *arXiv.org*, 24 March 2020 (2020-03-24), sections 1-3, and figures 2-4 | 1-16 |
| A | CN 108846892 A (CHEN, Chen) 20 November 2018 (2018-11-20) entire document | 1-16 |
| A | CN 1645416 A (SHANGHAI JIAO TONG UNIVERSITY) 27 July 2005 (2005-07-27) entire document | 1-16 |
| A | CN 105303611 A (HUADE SOFTWARE) 03 February 2016 (2016-02-03) entire document | 1-16 |
| A | CN 108648268 A (ZHEJIANG UNIVERSITY) 12 October 2018 (2018-10-12) entire document | 1-16 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 June 2021** | **22 June 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/082485**

| Patent document cited in search report | | | Publication date (day/month/year) | Patent family member(s) | | | Publication date (day/month/year) |
|---|---|---|---|---|---|---|---|
| CN | 111739159 | A | 02 October 2020 | None | | | |
| CN | 108846892 | A | 20 November 2018 | None | | | |
| CN | 1645416 | A | 27 July 2005 | CN | 1275205 | C | 13 September 2006 |
| CN | 105303611 | A | 03 February 2016 | None | | | |
| CN | 108648268 | A | 12 October 2018 | CN | 108648268 | B | 04 August 2020 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010607430